# EUROPEAN PATENT APPLICATION

(11) **EP 4 790 250 A1**
(43) Date of publication of application: **12.08.2026**
(21) Application number: 24874304.9
(22) Date of filing: 04.06.2024
(51) Int. Cl.: F02C 6/16, F22B 1/02, F22B 1/16, F22G 1/00

(54) **COMPRESSED AIR ENERGY STORAGE DEVICE**

(30) Priority: 04.10.2023 JP 2023173232
(71) Applicant: Hitachi Industrial Equipment Systems Co., Ltd., Tokyo 101-0021 (JP)
(72) Inventor: KOYAMA, Masaki, Tokyo 100-8280 (JP); NAGATA, Shuhei, Tokyo 100-8280 (JP); MAITA, Hiroshi, Tokyo 100-8280 (JP); KAWAMURA, Hironobu, Tokyo 100-8280 (JP); SEKIYA, Sachio, Tokyo 100-8280 (JP)
(74) Representative: MERH-IP Matias Erny Reichl Hoffmann Patentanwälte PartG mbB
(86) International application number: PCT/JP2024/020340
(87) International publication number: WO 2025/074687

(57) **Abstract**

A technique capable of performing electric power supply and demand adjustment is provided. A compressed air energy storage apparatus 100 includes air compressors 6 and 7 that generate compressed air, heat exchangers 24 and 25 that perform heat exchange between the compressed air and a heat storage medium, a pressure storage tank 8 that stores the compressed air heat-exchanged by the heat exchangers 24 and 25, a heat storage tank 21 that stores the heat storage medium heat-exchanged by the heat exchangers 24 and 25, a heat exchanger 32 that heats water by heat exchange with the heat storage medium to generate low-pressure steam, a steam compressor 41 that compresses the low-pressure steam to generate high-temperature steam, generators 12 and 13 that generate electric power, and expanders 10 and 11 that drive the generators 12 and 13 by the compressed air or the high-temperature steam, and supplies one or more of the compressed air, the high-temperature steam, and the electric power.

## Description

### TECHNICAL FIELD

The present invention relates to a compressed air energy storage apparatus.

### BACKGROUND ART

Renewable energy generation such as wind power generation and photovoltaic power generation depends on weather conditions, and therefore the amount of generated power may fluctuate and become unstable. In response to such fluctuations, a compressed air energy storage (Compressed Air Energy Storage: CAES) system is known as a system for leveling power output.

A compressed air energy storage apparatus (CAES apparatus) using this CAES system, for example, in a case where power is generated by a photovoltaic power generation apparatus, operates a compressor during a time period in which surplus electric power is generated in daytime to store electric energy as compressed air in a pressure storage tank, and drives an expander by the compressed air to operate a generator when electric power is required, thereby generating electric energy and leveling the output.

In such a CAES apparatus, for example, Patent Literature 1 discloses a compressed air energy storage apparatus that stores compressed air in tanks having different sizes in accordance with a cycle of power fluctuation.

On the other hand, equipment such as a pneumatic system (air compressor) and a boiler, which are generally used as a power source in a factory, has a large proportion of energy usage such as electric power and fossil fuels, has large energy loss due to waste heat, and also has a large amount of carbon dioxide emissions.

As an apparatus that uses waste heat of other equipment in a boiler, for example, Patent Literature 2 discloses an apparatus that heats boiler water using waste heat of a prime mover of a ship and uses steam as a heating source in the ship.

### CITATION LIST

### PATENT DOCUMENT

Patent Literature 1: Japanese Patent No.6368577
Patent Literature 2: Japanese Unexamined Patent Application Publication No.2015-17771

### SUMMARY OF THE INVENTION

### PROBLEMS TO BE SOLVED BY THE INVENTION

However, Patent Literatures 1 and 2 do not disclose performing power supply-demand adjustment by combining an air compressor and a boiler.

Accordingly, an object of the present invention is to provide a technique capable of performing power supply-demand adjustment.

### SOLUTIONS TO PROBLEMS

In order to solve the above problem, one representative compressed air energy storage apparatus of the present invention includes an air compressor that generates compressed air, a first heat exchanger that performs heat exchange between the compressed air and a heat storage medium, a pressure storage tank that stores the compressed air heat-exchanged in the first heat exchanger, a heat storage tank that stores the heat storage medium heat-exchanged in the first heat exchanger, a low-pressure steam generation device that heats water by heat exchange with the heat storage medium to generate low-pressure steam, a steam compressor that compresses the low-pressure steam to generate high-temperature steam, a generator that generates electric power, and an expander that drives the generator by compressed air or high-temperature steam, and supplies one or more of compressed air, high-temperature steam, and electric power.

### EFFECTS OF THE INVENTION

According to the present invention, power supply-demand adjustment can be performed.

Problems, configurations, and effects other than those described above will be clarified by the following description of embodiments.

### BRIEF DESCRIPTION OF THE DRAWINGS

Fig.1 is a diagram illustrating an example of a schematic configuration of a compressed air energy storage apparatus of Example 1.
Fig.2 is a diagram illustrating an example of a schematic configuration of a compressed air energy storage apparatus of Example 2.
Fig.3 is a diagram illustrating an example of a schematic configuration of a compressed air energy storage apparatus of Example 3.
Fig.4 is a diagram illustrating an example of a schematic configuration of a compressed air energy storage apparatus of Example 4.
Fig.5 is a diagram illustrating an example of a schematic configuration of a compressed air energy storage apparatus of Example 5.
Fig.6 is a diagram illustrating an example of a schematic configuration of a compressed air energy storage apparatus of Example 6.
Fig.7 is a flowchart of an operation control process executed by a control device of a compressed air energy storage apparatus of Example 1.

### MODE FOR CARRYING OUT THE INVENTION

Hereinafter, embodiments of the present invention will be described with reference to the accompanying drawings. The same reference numerals are assigned to the same constituent elements, and the same descriptions will not be repeated.

### [Example 1]

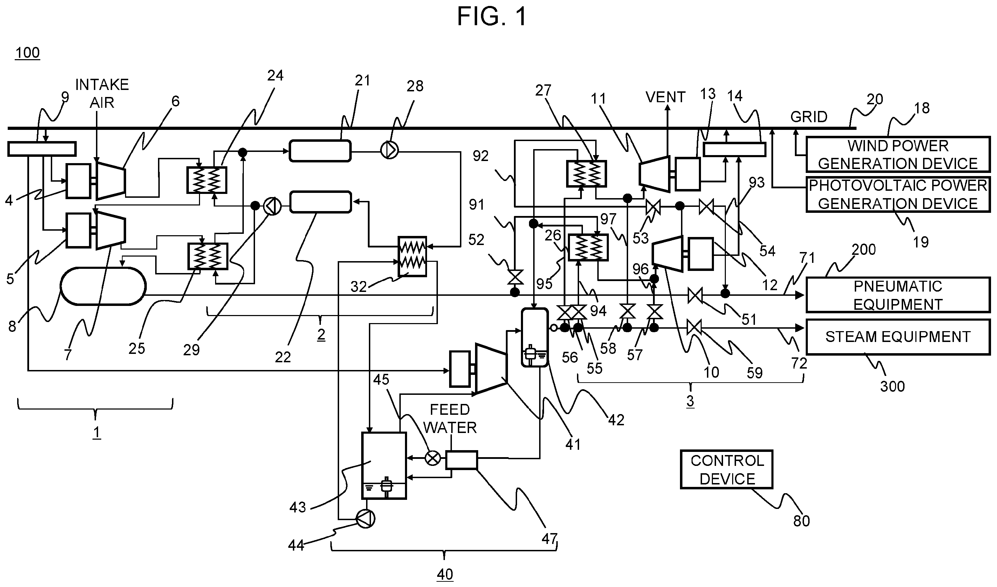

Fig.1 is a diagram illustrating an example of a schematic configuration of a compressed air energy storage apparatus of Example 1.

A compressed air energy storage apparatus 100 includes a pneumatic unit 1, a heat storage unit 2, a boiler unit 40, and a power generation unit 3.

The pneumatic unit 1 includes motors (electric motors) 4 and 5, air compressors 6 and 7, and a pressure storage tank 8. The heat storage unit 2 includes a high-temperature-side heat storage tank 21 and a low-temperature-side heat storage tank 22 containing a heat storage medium such as water, and heat exchangers 24 and 25. The boiler unit 40 mainly includes a steam compressor 41. The power generation unit 3 includes expanders 10 and 11, and generators 12 and 13.

The motors 4 and 5 are connected, via an inverter 9, to grid power 20 using renewable energy and the like. Further, the power generation unit 3 is connected to the grid power 20 via a power conditioner 14. The grid power 20 is connected to a photovoltaic power generation apparatus 18 and a wind power generation apparatus 19.

The motor 4 is mechanically connected to the air compressor 6 that performs a low-stage compression process, and the motor 5 is mechanically connected to the air compressor 7 that performs a high-stage compression process. The pneumatic unit 1 performs two-stage compression by the low-stage compression process and the high-stage compression process.

An intake port of the air compressor 6 is open to the atmosphere, and a discharge port of the air compressor 6 is connected to the heat exchanger 24 and thereafter connected to an intake port of the air compressor 7. A discharge port of the air compressor 7 is connected to the heat exchanger 25 and thereafter connected to the pressure storage tank 8.

An intake port of the expander 10 is connected to the heat exchanger 26, and a discharge port of the expander 10 is connected to a pipe 92 connected to the heat exchanger 27 and a pipe 93 connected to the first pneumatic pipe 71. The pipe 92 has a valve 53, and the pipe 93 has a valve 54. An intake port of the expander 11 is connected to the heat exchanger 27, and a discharge port of the expander 11 is open to the atmosphere.

The heat exchanger 26 has a pipe 91 connected to the pressure storage tank 8, and the pipe 91 has a valve 52. Compressed air from the pressure storage tank 8 flows into the heat exchanger 26.

A pneumatic equipment 200 driven by pneumatic power in a factory is connected to the pressure storage tank 8 by the first pneumatic pipe 71, and the first pneumatic pipe 71 has a valve 51. Supply of compressed air to the pneumatic equipment 200 is performed from the pressure storage tank 8 via the first pneumatic pipe 71.

The heat storage unit 2 has a fluid circuit that connects the heat exchangers 24 and 25, the heat storage tank 21, the heat exchanger 32, and the heat storage tank 22. The heat storage medium exchanges heat with compressed air in the heat exchangers 24 and 25 to recover compression heat, and the high-temperature heat storage medium is stored in the heat storage tank 21. Thereafter, low-pressure steam is generated by heat exchange with low-temperature water in the heat exchanger 32, and the low-temperature heat storage medium is stored in the heat storage tank 22. These fluid circuits are provided with pumps 28 and 29 for transferring the heat storage medium.

The boiler unit 40 includes a low-pressure steam generation device 43, a gas-liquid separator 42, a low-temperature water circulation pump 44, a steam compressor 41, a pressure reducing valve 45, and a medium-temperature water heat recovery heat exchanger 47. The low-pressure steam generation device 43 heats water flowing in from the gas-liquid separator 42 via a water supply pipe to generate low-pressure steam, and the generated low-pressure steam is compressed by the steam compressor 41 to generate high-temperature steam. The water supply pipe is provided with the pressure reducing valve 45.

In the low-pressure steam generation device 43, a part of low-temperature water is vaporized to become low-pressure steam at atmospheric pressure or lower, the low-pressure steam and the low-temperature water are separated, the low-pressure steam is guided to the steam compressor 41, and the low-temperature water is sent to the heat exchanger 32 by the low-temperature water circulation pump 44.

The steam compressor 41 is driven by a motor connected to the grid power 20 via the inverter 9, compresses low-pressure steam to high temperature and high pressure, and generates high-temperature steam. The high-temperature steam is supplied as a heat source for process heating and the like to a steam equipment 300 in the factory.

The steam equipment 300 in the factory is connected to the steam compressor 41 by the first steam pipe 72, and the first steam pipe 72 has a valve 59. Supply of high-temperature steam to the steam equipment 300 is performed from the steam compressor 41 via the first steam pipe 72.

The first steam pipe 72 is connected to pipes 94 and 95 connected to the heat exchangers 26 and 27, respectively, and pipes 96 and 97 connected to the expanders 10 and 11, respectively. The pipes 94 and 95 have valves 55 and 56, respectively, and the pipes 94 and 95 have valves 57 and 58, respectively.

The power generation unit 3 includes expanders 10 and 11 driven by compressed air, generators 12 and 13 that are driven by the expanders 10 and 11 to perform power generation, a power conditioner 14 that performs voltage conversion of generated electric power, and heat exchangers 26 and 27 that heat compressed air at inlets of the expanders 10 and 11.

The expander 10 is responsible for a high-stage expansion process, and the expander 11 is responsible for a low-stage expansion process. The power generation unit 3 performs two-stage expansion by the high-stage expansion process and the low-stage expansion process.

The generator 12 is mechanically connected to the expander 10, and the generator 13 is mechanically connected to the expander 11. The generators 12 and 13 perform power generation (electric power regeneration) by being driven by the expanders 10 and 11. The generators 12 and 13 are connected to the grid power 20 via the power conditioner 14, and return regenerated electric power to the grid power 20.

Further, the compressed air energy storage apparatus 100 includes a control device 80. The control device 80 controls operation of the air compressors 6 and 7 and the steam compressor 41, and controls opening and closing of the valves 51, 52, 53, 54, 55, 56, 57, 58, and 59, in accordance with demand for compressed air, demand for high-temperature steam, and demand for electric power in a factory.

Operation of the compressed air energy storage apparatus 100 will be described.

First, an operation of generating and storing compressed air will be described.

The motors 4 and 5 connected to the grid power 20 using renewable energy and the like are driven by input electric power from the grid power 20. Two-stage compression is performed by the air compressor 6 driven by the motor 4 and the air compressor 7 driven by the motor 5.

The air compressor 6 takes in atmosphere from an intake port and performs first-stage adiabatic compression. Compressed air discharged from a discharge port of the air compressor 6 is heat-exchanged with the heat storage medium in the heat exchanger 24 and thereafter taken into the air compressor 7.

The compressed air taken into the air compressor 7 is further subjected to second-stage adiabatic compression by the air compressor 7 and becomes a high-pressure and high-temperature state. This compressed air is heat-exchanged with the heat storage medium in the heat exchanger 25.

The heat exchangers 24 and 25 perform heat exchange between high-temperature compressed air and the heat storage medium supplied by branching from the low-temperature-side heat storage tank 22. By this heat exchange, the low-temperature heat storage medium becomes high temperature and is stored in the high-temperature-side heat storage tank 21. On the other hand, the compressed air heat-exchanged with the heat storage medium in the heat exchanger 25 has its temperature lowered, flows into the pressure storage tank 8, and is stored.

By the above operation, compressed air energy generated as compressed air and compression heat during compressed air generation in the pneumatic unit is stored, with the compressed air being stored in the pressure storage tank 8 and the compression heat being stored in the heat storage tank 21.

Next, an operation of supplying compressed air will be described.

The compressed air stored in the pressure storage tank 8 is sequentially supplied from the pressure storage tank 8 to the pneumatic equipment 200.

Further, as will be described later, the compressed air stored in the pressure storage tank 8 is also used for expansion power generation by the expanders 10 and 11. For this reason, the pressure storage tank 8 stores compressed air at a pressure higher than a pressure used by the pneumatic equipment 200 in the factory. When the pressure of the pressure storage tank 8 and the pressure used by the pneumatic equipment 200 in the factory are greatly different and the used pressure is low, the valve 51 of the first pneumatic pipe 71 that supplies compressed air from the pressure storage tank 8 to the pneumatic equipment 200 is closed, and the valve 52 of the pipe 91 that supplies compressed air to the heat exchanger 26 is opened, so that the compressed air flows into the expander 10 through the heat exchanger 26. After the compressed air is reduced in pressure and expanded in the expander 10 to a pressure used by the pneumatic equipment 200, the valve 54 of the pipe 93 is opened to return the compressed air to the first pneumatic pipe 71, and the compressed air is supplied to the pneumatic equipment 200. At that time, the generator 12 is driven by the expander 10, and the generator 12 performs a power generation operation.

When the pressure of the pressure storage tank 8 decreases and approaches the pressure used by the pneumatic equipment 200, the valve 52 of the pipe 91 that supplies compressed air to the heat exchanger 26 is closed, and the valve 51 of the first pneumatic pipe 71 that supplies compressed air from the pressure storage tank 8 to the pneumatic equipment 200 is opened, so that the pressure of the pressure storage tank 8 is reduced and adjusted and the compressed air is directly supplied to the pneumatic equipment 200.

Next, an operation of supplying high-temperature steam will be described.

Generation of high-temperature steam is performed in the boiler unit 40. In the low-pressure steam generation device 43, low-temperature water flowing in from the gas-liquid separator 42 via a water supply pipe is subjected to gas-liquid separation, and liquid low-temperature water is sent to the heat exchanger 32 by the low-temperature water circulation pump 44.

The heat storage medium stored in the heat storage tank 21 is supplied to the heat exchanger 32 by the pump 28, exchanges heat with the low-temperature water flowing in from the low-pressure steam generation device 43, and heats the low-temperature water. A part of the heated low-temperature water is vaporized to become low-pressure steam at atmospheric pressure or lower, and after gas-liquid separation, the low-pressure steam is drawn into the steam compressor 41. By the steam compressor 41, the low-pressure steam is compressed to high temperature and high pressure, passes through the gas-liquid separator 42, and is supplied as high-temperature steam from a steam pipe as a heat source for process heating and the like in a factory or the like.

Condensed water separated by the gas-liquid separator 42 is heated by heat exchange with feed water to the low-pressure steam generation device 43 in the medium-temperature water heat recovery heat exchanger 47, and thereafter is reduced in pressure to a low pressure by the pressure reducing valve 45 and returned to the low-pressure steam generation device 43.

Further, as will be described later, the high-temperature steam generated in the boiler unit 40 is also used for expansion power generation by the expanders 10 and 11. For expansion power generation, the valves 55, 56, 57, and 58 that supply high-temperature steam to the pipes 94, 95, 96, and 97 connected to the heat exchangers 26 and 27 and the intake ports of the expanders 10 and 11 are opened, and the high-temperature steam is supplied to the power generation unit 3.

Next, a power generation operation in which the generator is driven by compressed air to generate electric power will be described.

Compressed air stored in the pressure storage tank 8 is supplied to the heat exchanger 26 by opening the valve 52 of the pipe 91. In the heat exchanger 26, the compressed air is heated to a high temperature by heat exchange with high-temperature steam supplied from the boiler unit 40, and the high-temperature compressed air is drawn into the expander 10 to perform first-stage adiabatic expansion. As a result, the expander 10 is driven.

Air adiabatically expanded by the expander 10 is supplied to the heat exchanger 27. In the heat exchanger 27, the compressed air is heated to a high temperature by heat exchange with high-temperature steam supplied from the boiler unit 40, and the compressed air is drawn into the expander 11 to perform second-stage adiabatic expansion. As a result, the expander 11 is driven. The compressed air adiabatically expanded by the expander 11 returns to a low-temperature and low-pressure state and is released to the atmosphere from a discharge port of the expander 11.

By driving the expanders 10 and 11 that perform two-stage expansion, power generation is performed by the generator 12 driven by the expander 10 and the generator 13 driven by the expander 11, and the generated electric power is supplied to the grid power 20 via the power conditioner 14.

By the above operation, compressed air energy stored as compressed air and compression heat is used for compressed air supply, high-temperature steam supply, and power generation or electric power supply.

Operation modes of the compressed air energy storage apparatus 100 will be described.

In operation mode 1, only compressed air storage is performed. The compressed air energy storage apparatus 100 performs an operation of generating compressed air and storing the compressed air in the pressure storage tank 8 and storing compression heat in the heat storage tank 21.

In operation mode 2, only compressed air supply is performed. The compressed air energy storage apparatus 100 performs a compressed air supply operation.

Here, when compressed air having a pressure close to a pressure used by the pneumatic equipment 200 is stored in the pressure storage tank 8, compressed air supply is performed by reducing and adjusting pressure by the valve 51 of the first pneumatic pipe 71 (operation mode 2-1).

On the other hand, when a sufficiently high pressure is stored with respect to the pressure used by the pneumatic equipment 200, the valves 52 and 54 are opened, pressure is reduced by adiabatic expansion in the expander 10, and thereafter compressed air is supplied through the first pneumatic pipe 71 (operation mode 2-2). When adiabatic expansion is performed by the expander 10, power generation is also performed at the same time, and therefore electric power is supplied together with compressed air.

Further, by preparing a plurality of pressure storage tanks 8, power generation can be performed in accordance with demand for electric power.

When electric power supply is required, compressed air stored at high pressure in the pressure storage tank 8 is adiabatically expanded by the expander 10 to simultaneously perform compressed air supply and electric power supply. When the pressure of the pressure storage tank 8 approaches the pressure used by the pneumatic equipment 200, the operation is switched to another pressure storage tank 8 in which high-pressure compressed air is stored, and compressed air supply and electric power supply are continued.

When electric power supply is not required, compressed air is supplied through the valve 51 from the pressure storage tank 8 in which a pressure close to the pressure used by the pneumatic equipment 200 is stored. When the pressure falls below the pressure used by the pneumatic equipment 200, the operation is switched to another pressure storage tank 8 in which low pressure is stored, and compressed air is supplied through the valve 51.

In operation mode 3, compressed air storage and compressed air supply are simultaneously performed. The compressed air energy storage apparatus 100 simultaneously performs a charging operation of generating and storing compressed air and an operation of supplying compressed air.

The air compressors 6 and 7 are operated in a storage mode in which compressed air is compressed to a high pressure, and the compressed air in the pressure storage tank 8 is supplied by adiabatic expansion in the expander 10 (operation mode 3-1) or by pressure reduction adjustment using the valve 51 (operation mode 3-2).

At that time, when a plurality of pressure storage tanks 8 are provided, a pressure storage tank used for the compressed air storage operation and a pressure storage tank used for the compressed air supply may be different tanks.

Further, since high-temperature heat storage medium is also stored in the heat storage tank 22 by operation of the air compressors 6 and 7, the boiler unit 40 is driven to generate high-temperature steam, and compressed air to be adiabatically expanded is heated in the heat exchanger 26, or compressed air is heated to a high temperature by directly mixing high-temperature steam with compressed air and then supplied to the expander 10, thereby increasing an amount of generated electric power. When heating is performed in the heat exchanger 26, the valve 56 is opened to supply high-temperature steam to the heat exchanger 26 (operation mode 3-1-1). When direct mixing is performed, the valve 58 is opened to supply high-temperature steam together with compressed air to the expander 10 (operation mode 3-1-2).

In operation mode 4, only high-temperature steam supply is performed. The compressed air energy storage apparatus 100 performs an operation of supplying high-temperature steam.

At this time, when high-temperature heat storage medium is stored in the heat storage tank 21, the boiler unit 40 is operated without operating the air compressors 6 and 7.

In operation mode 5, compressed air storage and high-temperature steam supply are simultaneously performed. When there is demand for steam in the steam equipment 300 and the high-temperature heat storage medium stored in the heat storage tank 21 is insufficient, the air compressors 6 and 7 are operated to cause compression heat to be exchanged to the heat storage medium in the heat exchangers 24 and 25 and supplied to the boiler unit 40. At that time, compressed air is stored in the pressure storage tank 8.

In operation mode 6, compressed air supply and high-temperature steam supply are simultaneously performed. Compressed air is supplied from the pressure storage tank 8, and high-temperature steam is generated by supplying heat from the heat storage medium in the heat storage tank 21 to the boiler unit 40 and operating the steam compressor 41, and is supplied through the valve 59.

Here, when either compressed air or compression heat stored in the pressure storage tank 8 and the heat storage tank 21 becomes insufficient, the air compressors 6 and 7 are operated to supply compressed air and compression heat to the pressure storage tank 8 and the heat storage tank 21. Supply is performed in accordance with amounts of compressed air and high-temperature steam used in a factory, but the same amounts are not necessarily required at the same time. Operation of the air compressors 6 and 7 is performed in accordance with demand for whichever of compressed air or compression heat is insufficient, and the other remaining one is stored in the pressure storage tank 8 or the heat storage tank 21 and used for next supply. That is, leveling of supply of compressed air and high-temperature steam is performed by the pressure storage tank 8 and the heat storage tank 21.

In operation mode 7, only power generation is performed. The compressed air energy storage apparatus 100 performs an operation of driving the expanders 10 and 11 with compressed air and driving the generators 12 and 13 to generate electric power.

At the same time, the boiler unit 40 is operated, and by supplying high-temperature steam to the heat exchangers 26 and 27 to heat compressed air, an amount of generated electric power can be increased (operation mode 7-1). Further, high-temperature steam may be directly mixed with compressed air through the valves 57 and 58 to heat the compressed air (operation mode 7-2).

Immediately after start of operation of the expanders 10 and 11, heating is performed by direct mixing that enables faster temperature rise, and when temperatures of the heat exchangers 26 and 27 sufficiently increase, heating is switched to heating using the heat exchangers 26 and 27. That is, immediately after start of operation, the valves 55,56,57, and 58 are opened to supply high-temperature steam to the heat exchangers 26 and 27 and to directly mix the high-temperature steam with compressed air, and after outlet air temperatures of the heat exchangers 26 and 27 sufficiently increase, the valves 57 and 58 are closed to end direct mixing.

Operation in which power generation is performed by supplying only compressed air to the expanders 10 and 11 without operating the boiler unit 40 is also possible (operation mode 7-3). In this case, an amount of generated electric power is reduced compared with a case where high-temperature compressed air flows into the expanders 10 and 11.

In operation mode 8, power generation and compressed air supply are simultaneously performed. The compressed air energy storage apparatus 100 simultaneously performs an operation of generating electric power by driving the generators with compressed air and an operation of supplying compressed air.

In this case, there are three operation modes. A first mode is a mode in which power generation by adiabatic expansion is performed by the expander 10 and compressed air is supplied through the valves 52 and 54 (operation mode 8-1). A second mode is a mode in which compressed air is supplied by pressure reduction adjustment using the valve 51 and, at the same time, the valves 52 and 53 are opened to simultaneously perform expansion power generation by the expanders 10 and 11 (operation mode 8-2). A third mode is a mode in which the boiler unit 40 is also operated at the same time to heat compressed air with high-pressure steam and then expansion power generation is performed (operation mode 8-3). These modes are switched in accordance with an amount of required power generation together with compressed air supply, and when a larger amount of generated electric power is required, operation is switched from operation mode 8-1 to operation mode 8-2 and from operation mode 8-2 to operation mode 8-3.

Further, when a plurality of pressure storage tanks 8 are used, a pressure storage tank 8 used for driving the expanders and a pressure storage tank 8 used for compressed air supply may be different tanks.

In operation mode 9, high-temperature steam supply and power generation supply are simultaneously performed. The compressed air energy storage apparatus 100 simultaneously performs a high-temperature steam supply operation and a power generation operation.

The boiler unit 40 generates high-temperature steam and supplies the high-temperature steam through the valve 59, and also heats compressed air to raise a temperature of compressed air drawn into the expanders 10 and 11.

At this time, when compressed air is stored in the pressure storage tank 8, the valves 52,53,55,56,57, and 58 are opened to heat the compressed air in the pressure storage tank 8 by the heat exchangers 26 and 27 and the above-described direct mixing, drive the expanders 10 and 11, and generate electric power by the generators 12 and 13 (operation mode 9-1).

When sufficient compressed air for expansion power generation is not stored in the pressure storage tank 8, there are two operation modes. One is a mode in which the air compressors 6 and 7 are operated to supply compressed air (operation mode 9-2-1), and the other is a mode in which the valves 52,55, and 56 are closed and the expanders 10 and 11 are driven using only high-temperature steam without using compressed air (operation mode 9-2-2). Switching between these modes is performed in accordance with power supply and demand adjustment requirements described later.

Operation mode switching and power supply and demand adjustment of the compressed air energy storage apparatus 100 will be described.

When the photovoltaic power generation device 18 and the wind power generation device 19 are connected to the grid power 20 and electric power derived from renewable energy power generation is used, if the amount of renewable energy power generation exceeds the amount of used electric power and surplus electric power is generated, the compressed air energy storage apparatus 100 is operated in operation mode 1 in which compressed air storage is performed, and the surplus electric power is stored as compressed air and compression heat.

At this time, when demand for compressed air of the pneumatic equipment 200 is large and the amount of compressed air used is large, the compressed air energy storage apparatus 100 is operated in operation mode 3 in which compressed air storage and compressed air supply are simultaneously performed. In this case, compressed air used by the pneumatic equipment 200 is compressed air stored in the pressure storage tank 8.

Further, when demand for high-temperature steam of the steam equipment 300 is large and the amount of steam used is large, the compressed air energy storage apparatus 100 is operated in operation mode 5 in which compressed air storage and high-temperature steam supply are simultaneously performed. In this case, high-temperature steam used by the steam equipment 300 is generated by recovering compression heat stored in the heat storage tank 21 in the boiler unit 40 and generating high-temperature steam by the steam compressor 41.

When production facilities in the factory are stopped and there are no operation requests from the pneumatic equipment 200 and the steam equipment 300, the apparatus is operated in operation mode 1 in which only compressed air storage is performed.

Since the stored compressed air and compression heat are also used as a heat source for compressed air supply and high-temperature steam generation, it is desirable that compressed air be sufficiently stored during a time period when electric power demand is small.

For example, when renewable energy power generation is large during daytime and surplus electric power is generated, by operating in a charging mode during nighttime, electric power usage during daytime and nighttime can be leveled, and electric power cost can also be reduced by reducing usage of grid electric power during nighttime.

Next, when the amount of renewable energy power generation is smaller than the amount of used electric power, the compressed air energy storage apparatus 100 is operated in operation mode 6 in which compressed air supply and high-temperature steam supply are performed. Compressed air in the pressure storage tank 8 is supplied to the pneumatic equipment 200, compression heat stored in the heat storage tank 21 is recovered in the boiler unit 40, high-temperature steam is generated by the steam compressor 41 and supplied to the steam equipment 300, and operation of the air compressors 6 and 7 is stopped.

Electric power for generating compressed air is not required, and electric power demand equivalent to 10 to 20 percent of factory electric power can be reduced. Further, energy for generating high-temperature steam becomes electric power for operating the steam compressor 41, so use of fossil fuels in combustion boilers using kerosene or gas can be reduced, and carbon dioxide emissions can be significantly reduced.

Further, when the amount of renewable energy power generation is small and there is no operation request from the pneumatic equipment 200, supply of compressed air from the pressure storage tank 8 is stopped, and compressed air in the pressure storage tank 8 is used to drive the expanders 10 and 11 to perform power generation by expansion. At this time, when there is an operation request from the steam equipment 300 and the boiler unit 40 is in operation, operation is performed in operation mode 9-1. However, high-pressure steam is preferentially supplied to the steam equipment 300, and is not supplied to the heat exchangers 26 and 27, and a small amount is heated by direct mixing into compressed air through the valves 57 and 58, or expansion power generation is performed without heating compressed air.

When compressed air in the pressure storage tank 8 becomes small, operation is switched to operation mode 9-2-2. When there is a margin in the amount of steam generated by the boiler unit 40 relative to the amount of high-temperature steam supplied to the steam equipment 300, power generation using only high-temperature steam can be performed, and reduction of used electric power by reducing electric power demand is also possible. When there is no margin in the amount of steam generated by the boiler unit 40, supply of high-temperature steam to the steam equipment 300 is prioritized and power generation is stopped.

Further, when there is no operation request from the steam equipment 300, operation is performed in operation mode 7, and high-temperature steam is not supplied to the steam equipment 300 and is used for heating compressed air. As a result, a shortage in generated electric power can be compensated by expansion power generation, and electric power demand of grid power can be reduced. When there is no operation request from the steam equipment 300, operation is switched to operation mode 7-3, operation of the boiler unit 40 is also stopped, and expansion power generation is performed without heating compressed air, thereby further reducing used electric power.

An operation control process executed by the control device 80 of the compressed air energy storage apparatus 100 will be described.

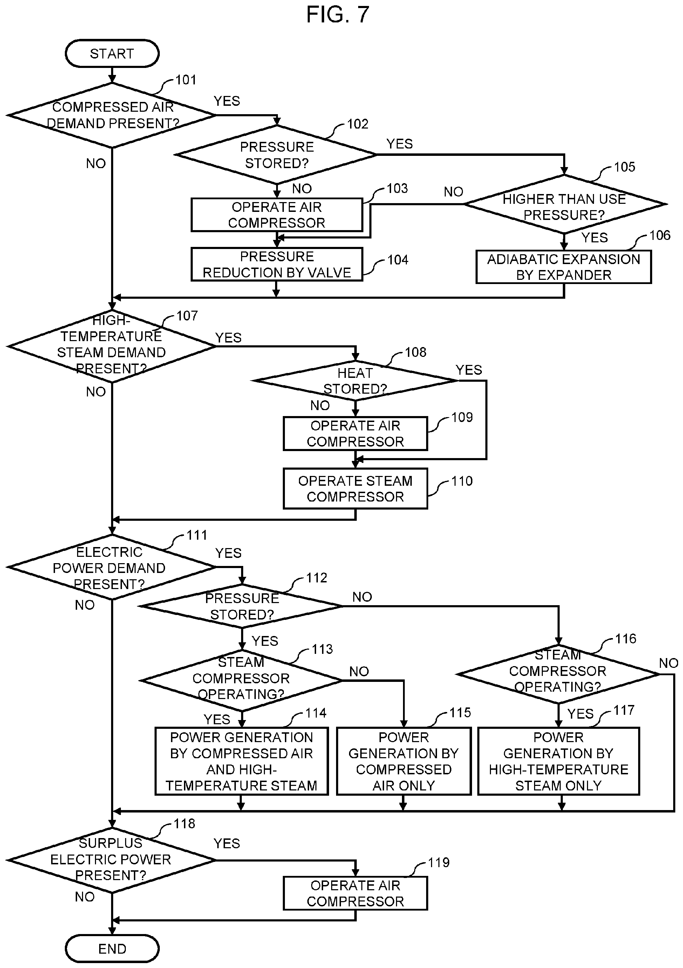

Fig.7 is a flowchart of the operation control process executed by the control device 80 of the compressed air energy storage apparatus 100 according to Example 1.

The control device 80 determines whether there is demand for compressed air from the pneumatic equipment 200 (step S101). When there is no demand for compressed air from the pneumatic equipment 200 in step S101, the process proceeds to step S107.

On the other hand, when there is demand for compressed air from the pneumatic equipment 200 in step S101, it is determined whether compressed air is stored in the pressure storage tank 8 (step S102). When compressed air is not stored in the pressure storage tank 8 in step S102, the control device 80 operates the air compressors 6 and 7 to generate compressed air and compression heat, stores the generated compressed air and compression heat in the pressure storage tank 8 and the heat storage tank 21 (step S103), controls the valve 51 to reduce and adjust pressure of compressed air and supplies compressed air to the pneumatic equipment 200 (step S104), and proceeds to step S107.

On the other hand, when compressed air is stored in the pressure storage tank 8 in step S102, it is determined whether a pressure of compressed air stored in the pressure storage tank 8 is higher than a pressure used by the pneumatic equipment 200 (step S105). When the pressure of compressed air stored in the pressure storage tank 8 is substantially the same as the pressure used by the pneumatic equipment 200 (NO in step S105), the process proceeds to step S104, the valve 51 is controlled to reduce and adjust pressure of compressed air, and compressed air is supplied to the pneumatic equipment 200.

On the other hand, when the pressure of compressed air stored in the pressure storage tank 8 is higher than the pressure used by the pneumatic equipment 200 in step S105, the valves 52 and 54 are opened, compressed air is reduced in pressure by adiabatic expansion in the expander 10, and thereafter compressed air is supplied through the first pneumatic pipe 71 (step S106), and the process proceeds to step S107.

In step S107, the control device 80 determines whether there is demand for high-temperature steam from the steam equipment 300. When there is no demand for high-temperature steam from the steam equipment 300 in step S107, the process proceeds to step S111.

On the other hand, when there is demand for high-temperature steam from the steam equipment 300 in step S107, it is determined whether compression heat is stored in the heat storage tank 21 (step S108). When compression heat is not stored in the heat storage tank 21 in step S108, the control device 80 operates the air compressors 6 and 7 to generate compressed air and compression heat, and stores the generated compressed air and compression heat in the pressure storage tank 8 and the heat storage tank 21 (step S109).

Next, the control device 80 operates the steam compressor 41 to generate high-temperature steam, controls the valve 59 to supply high-temperature steam to the steam equipment 300 (step S110), and proceeds to step S111.

On the other hand, when compression heat is stored in the heat storage tank 21 in step S108, the control device 80 proceeds to step S110 without executing step S109.

In step S111, the control device 80 determines whether electric power demand is present due to a large amount of electric power being used in the factory. When there is no electric power demand in step S111, the process proceeds to step S118.

On the other hand, when there is electric power demand in step S111, it is determined whether compressed air is stored in the pressure storage tank 8 (step S112). When compressed air is stored in the pressure storage tank 8 in step S112, the control device 80 determines whether the steam compressor 41 is in operation (step S113).

When the steam compressor 41 is in operation in step S113, the control device 80 opens the valves 52,53, and 54 to send compressed air from the pressure storage tank 8 to the expanders 10 and 11, opens the valves 55 and 56 or the valves 57 and 58 to heat the compressed air with high-pressure steam, and drives the generators 12 and 13 by the expanders 10 and 11 to perform power generation (step S114), and proceeds to step S118.

When the steam compressor 41 is not in operation in step S113, the control device 80 opens the valves 52,53, and 54 to send compressed air from the pressure storage tank 8 to the expanders 10 and 11, supplies only compressed air to the expanders 10 and 11 to perform power generation (step S115), and proceeds to step S118.

When compressed air is not stored in the pressure storage tank 8 in step S112, the control device 80 determines whether the steam compressor 41 is in operation (step S116).

When the steam compressor 41 is in operation in step S116, the control device 80 opens the valves 57 and 58 to send high-pressure steam to the expanders 10 and 11, supplies only high-temperature steam to the expanders 10 and 11 to perform power generation (step S117), and proceeds to step S118.

When the steam compressor 41 is not in operation in step S116, power generation is not performed and the process proceeds to step S118.

In step S118, the control device 80 determines whether an amount of renewable energy power generation exceeds an amount of used electric power and surplus electric power is generated.

When surplus electric power is generated in step S118, the control device 80 operates the air compressors 6 and 7 to generate compressed air and compression heat, stores the generated compressed air and compression heat in the pressure storage tank 8 and the heat storage tank 21 (step S119), and ends the process.

On the other hand, when surplus electric power is not generated in step S118, the control device 80 ends the process.

As described above, in the present example, compressed air and compression heat generated by the air compressors 6 and 7 are stored in the pressure storage tank 8 and the heat storage tank 21, compressed air is used for both compressed air supply and power generation by driving the expanders 10 and 11 and the generators 12 and 13 directly connected thereto, compression heat is used for both high-temperature steam supply and heating inlet air of the expanders for driving the generators, and furthermore, time shift from generation to use becomes possible by the pressure storage tank 8 and the heat storage tank 21. As a result, power supply and demand adjustment in a factory becomes possible, main power source utilization of renewable energy power generation and reduction in grid power usage become possible, and a compressed air energy storage apparatus integrating an air compressor and a steam boiler can be provided.

### [Example 2]

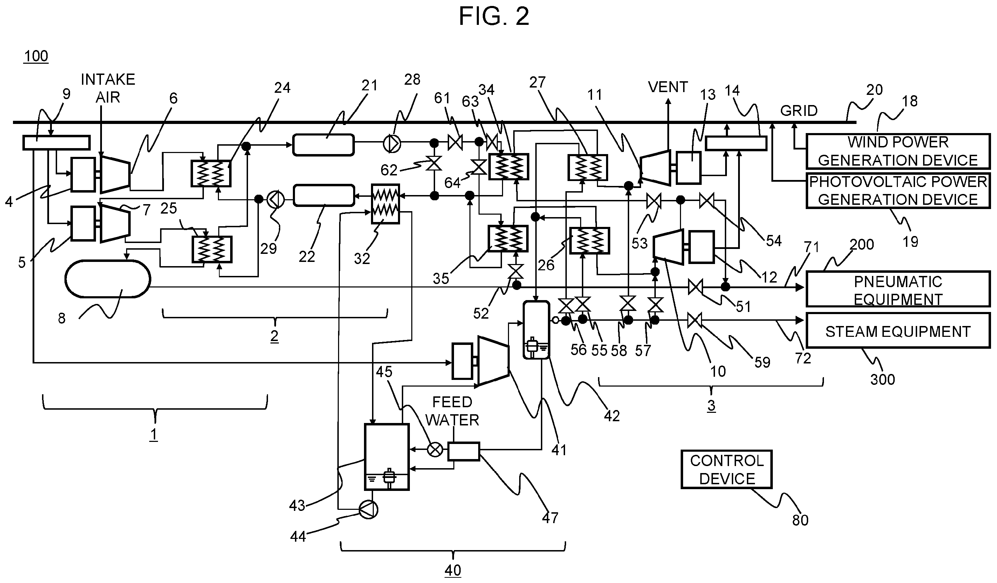

Fig.2 is a diagram illustrating an example of a schematic configuration of a compressed air energy storage apparatus of Example 2. In the following description, the same reference numerals are assigned to the same constituent elements as those of Example 1, and duplicate descriptions are omitted.

In Example 2, a fluid circuit through which a heat storage medium flows branches from a circuit through which the heat storage medium flows from the heat storage tank 21 to the heat exchanger 32 and is connected to the heat exchangers 34 and 35, respectively. The fluid circuits connected to the heat exchangers 34 and 35 can be opened and closed by the valves 61,62,63, and 64, respectively. Pumps 28 and 29 for transferring the heat storage medium are provided in these fluid circuits.

Next, a power generation operation in which the generator is driven by compressed air to generate electric power will be described.

Compressed air stored in the pressure storage tank 8 is supplied to the heat exchangers 34 and 35 by opening the valve 52. In the heat storage unit 2, by opening the valves 61,63, and 64, high-temperature heat storage medium of the heat storage tank 21 is supplied to the heat exchangers 34 and 35 to heat the compressed air to the temperature of the heat storage medium. The compressed air heated in the heat exchanger 35 passes through the heat exchanger 26, and thereafter is supplied to the expander 10 to drive the expander 10.

In the expander 10, a first-stage expansion operation is performed, and discharged compressed air is reduced in pressure and expanded, supplied to the heat exchanger 34 through the valve 53, heated again to the temperature of the heat storage medium, and thereafter supplied to the expander 11 through the heat exchanger 27 and drawn into the expander 11 to drive the expander 11.

In the expander 11, a second-stage expansion operation is performed, and thereafter the compressed air is discharged to the atmosphere. Generators 12 and 13 are directly connected to the expanders 10 and 11, respectively, and power generation is performed by the generators 12 and 13. The generated electric power is subjected to voltage conversion by the power conditioner 14 and supplied to the grid power 20.

On the other hand, when the valves 61,63, and 64 are closed and the valve 62 is opened, the heat storage medium flows into the heat exchanger 32 and heats low-pressure steam in the heat exchanger 32. In this case, the stored heat is used as a heat source for high-temperature steam generated in the boiler unit 40.

By heat exchange with high-temperature steam supplied from the boiler unit 40, compressed air is heated to a high temperature, and the compressed air is drawn into the expander 10 to perform first-stage adiabatic expansion. As a result, the expander 10 is driven.

Air adiabatically expanded by the expander 10 is supplied to the heat exchanger 27. By heat exchange with high-temperature steam supplied from the boiler unit 40, compressed air is heated to a high temperature, and the compressed air is drawn into the expander 11 to perform second-stage adiabatic expansion. As a result, the expander 11 is driven. The air adiabatically expanded by the expander 11 returns to a low-temperature and low-pressure state and is released to the atmosphere from a discharge port of the expander 11.

By driving the expanders 10 and 11 that perform two-stage expansion, power generation is performed by the generator 12 driven by the expander 10 and the generator 13 driven by the expander 11, and the generated electric power is supplied to the grid power 20 via the power conditioner 14.

Operation mode switching and power supply and demand adjustment of the compressed air energy storage apparatus 100 will be described.

When the amount of renewable energy power generation is smaller than the amount of used electric power and there is no operation request from the pneumatic equipment 200 and no operation request from the steam equipment 300, operation is performed in operation mode 7. When operation is performed in operation mode 7-3 to reduce the amount of used electric power, operation of the boiler unit 40 is stopped and compressed air heating using the heat exchangers 26 and 27 is not performed.

Therefore, in order to prevent a decrease in power generation amount due to a low temperature of compressed air drawn into the expanders 10 and 11, the valves 61,63, and 64 are opened to perform compressed air heating by the heat storage medium. As a result, the compressed air temperature at the expander inlet is restored to the temperature of the heat storage medium, and a decrease in power generation amount can be prevented.

As described above, in the present example, by enabling compression heat stored in the heat storage tank 21 to be used for both compressed air heating for power generation and high-temperature steam supply, it is possible to prevent a decrease in power generation amount during power supply and demand adjustment and to provide a compressed air energy storage apparatus capable of realizing high system efficiency.

### [Example 3]

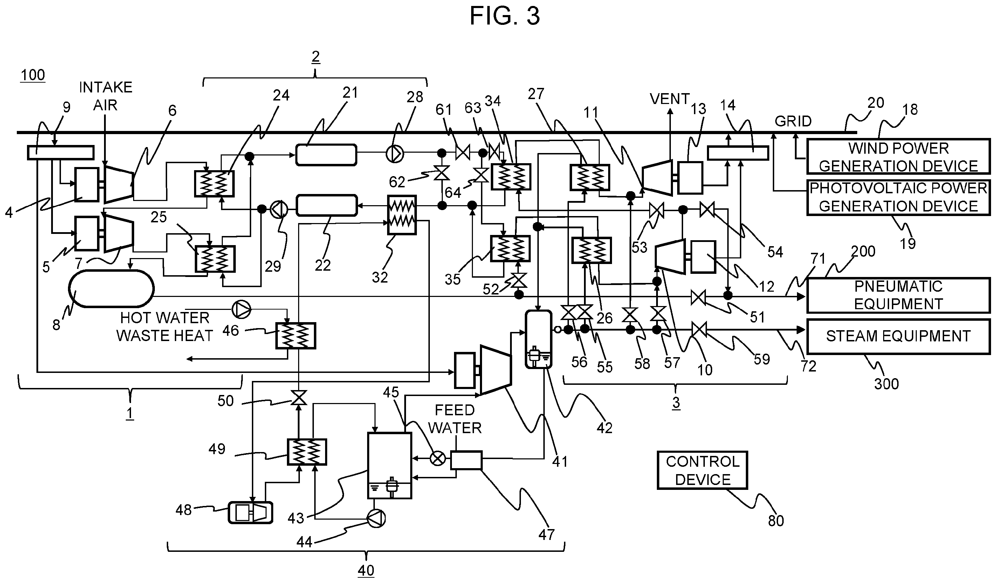

Fig.3 is a diagram illustrating an example of a schematic configuration of a compressed air energy storage apparatus of Example 3. In the following description, the same reference numerals are assigned to the same constituent elements as those of Examples 1 and 2, and duplicate descriptions are omitted.

In Example 3, low-temperature water separated in the low-pressure steam generation device 43 is sent to a radiator 49 by the low-temperature water circulation pump 44. The radiator 49 forms a refrigeration cycle together with a compressor 48, a heat absorber 46, the heat exchanger 32, and an expansion valve 50, and heats the low-temperature water in the radiator 49 by a refrigerant compressed by the compressor 48.

In the refrigeration cycle, after the radiator 49, pressure of the refrigerant is reduced by the expansion valve 50, and thereafter heat is absorbed in the order of the heat absorber 46 and the heat exchanger 32, and the refrigerant returns to the compressor 48. In the heat absorber 46, heat exchange is performed with waste heat such as hot water waste heat in a factory to recover waste heat of other equipment, and in the heat exchanger 32, heat exchange is performed between the heat storage medium and the refrigerant in the refrigeration cycle. Carbon dioxide, hydrocarbons, fluorocarbon refrigerants, and the like are used as the refrigerant.

The steam compressor 41 sucks low-pressure steam from the low-pressure steam generation device 43, compresses the low-pressure steam to high temperature and high pressure, and supplies the compressed steam as high-temperature steam as a heat source for process heating and the like in a factory or the like.

Next, an operation of supplying high-temperature steam will be described.

Generation of high-temperature steam is performed in the boiler unit 40. In the low-pressure steam generation device 43, low-temperature water flowing in from the gas-liquid separator 42 via a water supply pipe is subjected to gas-liquid separation, and liquid low-temperature water is sent to the radiator 49 by the low-temperature water circulation pump 44.

In the radiator 49, low-temperature water flowing in from the low-pressure steam generation device 43 is heat-exchanged with a refrigerant that has absorbed heat in the heat absorber 46 and the heat exchanger 32, thereby heating the low-temperature water. A part of the heated low-temperature water is vaporized to become low-pressure steam at atmospheric pressure or lower, and after gas-liquid separation, the low-pressure steam is drawn into the steam compressor 41. By the steam compressor 41, the low-pressure steam is compressed to high temperature and high pressure, passes through the gas-liquid separator 42, and is supplied as high-temperature and high-pressure steam from a steam pipe as a heat source for process heating and the like in a factory or the like.

Condensed water separated by the gas-liquid separator 42 is heated by heat exchange with feed water to the low-pressure steam generation device 43 in the medium-temperature water heat recovery heat exchanger 47, and thereafter is reduced in pressure to a low pressure by the pressure reducing valve 45 and returned to the low-pressure steam generation device 43.

Further, high-temperature steam generated in the boiler unit 40 is also used for expansion power generation by expanders. For expansion power generation, valves that supply high-temperature steam to the heat exchangers 26 and 27 and suction pipes of the expanders 10 and 11 are opened, and high-temperature steam is supplied to the power generation unit 3.

Operation mode switching and power supply and demand adjustment of the compressed air energy storage apparatus 100 will be described.

When the amount of renewable energy power generation is smaller than the amount of used electric power, there is no operation request from the pneumatic equipment 200, and there is an operation request from the steam equipment 300, operation is performed in operation mode 9-1. High-pressure steam is preferentially supplied to the steam equipment 300, and supply to the heat exchangers 26 and 27 is performed only when there is a margin in high-temperature steam supply.

Further, since the boiler unit 40 uses not only the heat storage medium stored in the heat storage tank 21 but also external hot water waste heat as a heat source, capacity of the boiler unit 40 can be increased, and high-temperature steam supply and compressed air heating can be simultaneously performed.

As described above, in the present example, since not only compression heat stored in the heat storage tank 21 but also other waste heat can be used as a heat source for high-temperature steam supply, it is possible to increase an amount of power generation during power supply and demand adjustment and to provide a compressed air energy storage apparatus capable of realizing high system efficiency.

### [Example 4]

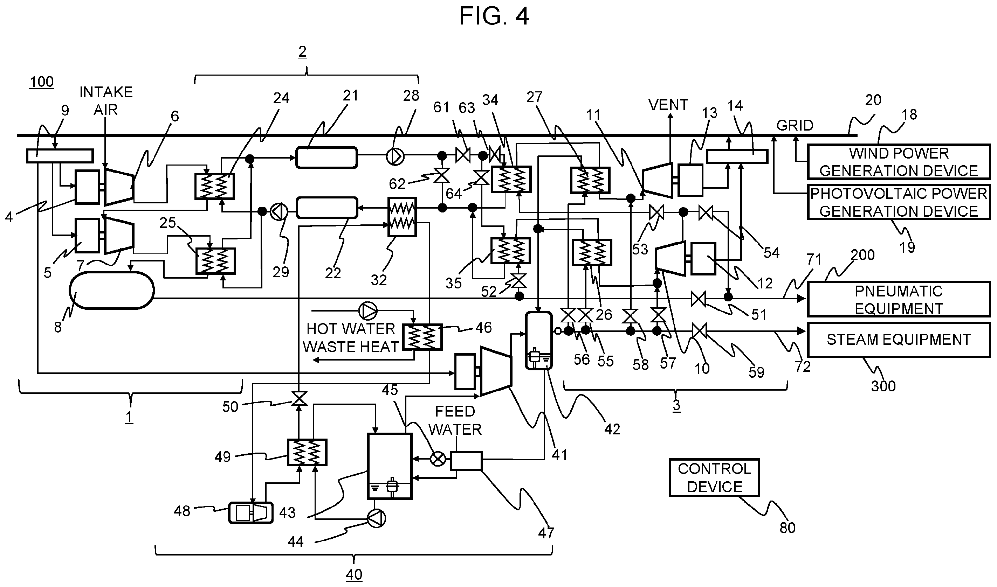

Fig.4 is a diagram illustrating an example of a schematic configuration of a compressed air energy storage apparatus of Example 4. In the following description, the same reference numerals are assigned to the same constituent elements as those of Examples 1 to 3, and duplicate descriptions are omitted.

In Example 4, a refrigeration cycle of the boiler unit 40 reduces pressure of a refrigerant by the expansion valve 50 after the radiator 49, thereafter absorbs heat in the order of the heat exchanger 32 and the heat absorber 46, and returns to the compressor 48. In the heat exchanger 32, heat exchange is performed between the heat storage medium and the refrigerant in the refrigeration cycle, and in the heat absorber 46, heat exchange is performed with waste heat such as hot water waste heat in a factory to recover waste heat of other equipment. Carbon dioxide, hydrocarbons, fluorocarbon refrigerants, and the like are used as the refrigerant.

A difference from Example 3 is an order of the heat absorber 46 and the heat exchanger 32 in the refrigeration cycle. In Example 3, the heat exchanger 32 is arranged downstream of the heat absorber 46, whereas in the present example, the heat absorber 46 is arranged downstream of the heat exchanger 32.

As described above, in the present example, since the heat absorber 46 is arranged downstream of the heat exchanger 32, even when a temperature of the heat storage medium after heat exchange in the heat exchangers 34 and 35 is lower than a temperature of hot water waste heat, heat can be effectively absorbed, and an ability to supply high-temperature steam can be increased.

### [Example 5]

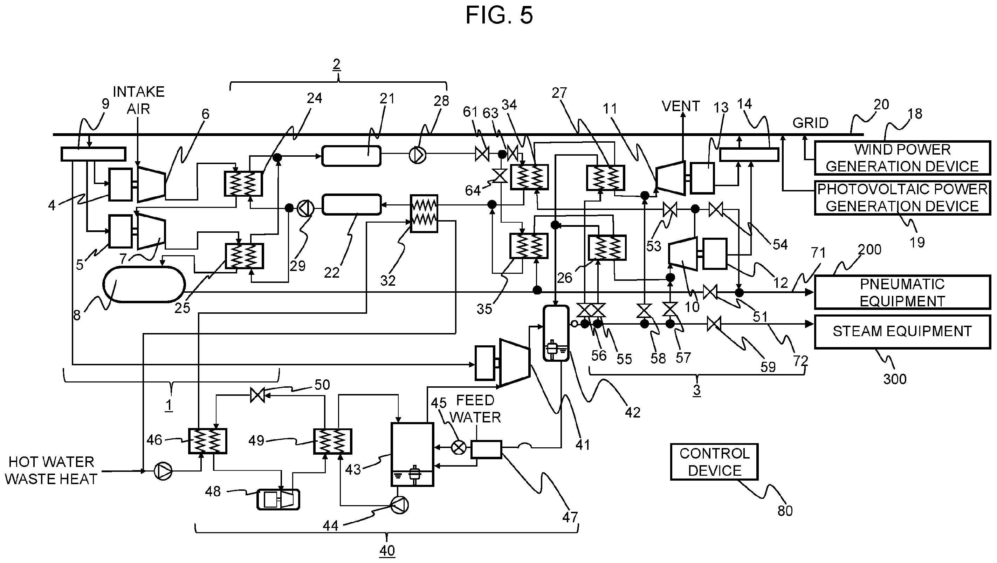

Fig.5 is a diagram illustrating an example of a schematic configuration of a compressed air energy storage apparatus of Example 5. In the following description, the same reference numerals are assigned to the same constituent elements as those of Examples 1 to 4, and duplicate descriptions are omitted.

In Example 5, a refrigeration cycle of the boiler unit 40 is configured by the compressor 48, the radiator 49, the expansion valve 50, and the heat absorber 46.

Further, both the heat absorber 46 and the heat exchanger 32 perform heat exchange between a refrigerant and the heat storage medium using hot water. Hot water waste heat from other equipment is supplied to the heat exchanger 32 and the heat absorber 46, absorbs heat from the heat storage medium after heat exchange in the heat exchangers 26 and 27 in the heat exchanger 32, and releases heat to the refrigerant in the heat absorber 46. Carbon dioxide, hydrocarbons, fluorocarbon refrigerants, and the like are used as the refrigerant.

An order in which hot water is supplied to the heat absorber 46 and the heat exchanger 32 is variable. In Fig.5, hot water is circulated in the order of the heat absorber 46 and the heat exchanger 32, but a direction of circulation may be changed depending on temperatures of hot water waste heat from other equipment and low-temperature heat storage medium.

As described above, in the present example, by changing a direction of hot water circulation while maintaining the same configuration, it is possible to cope with a temperature difference between hot water waste heat and low-temperature heat storage medium, and efficient steam generation becomes possible.

### [Example 6]

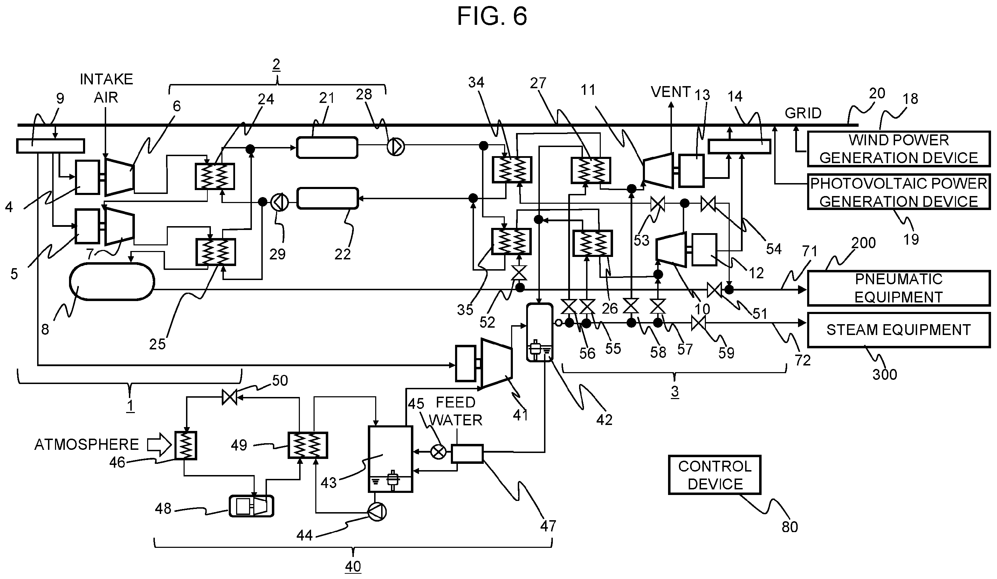

Fig.6 is a diagram illustrating an example of a schematic configuration of a compressed air energy storage apparatus of Example 6. In the following description, the same reference numerals are assigned to the same constituent elements as those of Examples 1 to 5, and duplicate descriptions are omitted.

In Example 6, a refrigeration cycle of the boiler unit 40 is formed by the radiator 49, the compressor 48, the heat absorber 46, and the expansion valve 50. The heat absorber 46 absorbs heat from the atmosphere, and low-temperature water is heated in the radiator 49 by a refrigerant compressed by the compressor 48. Carbon dioxide, hydrocarbons, fluorocarbon refrigerants, and the like are used as the refrigerant.

The steam compressor 41 sucks low-pressure steam from the low-pressure steam generation device 43, compresses the low-pressure steam to high temperature and high pressure, and supplies the compressed steam as high-temperature steam as a heat source for process heating and the like in a factory or the like.

As described above, in the present example, compression heat stored in the heat storage tank 21 is used only for compressed air heating during power generation, and heat is pumped up from the atmosphere and used as a heat source for high-temperature steam supply. Accordingly, it is possible to provide a compressed air energy storage apparatus capable of supplying compressed air, high-temperature steam, and electric power by using heat other than compression heat and hot water waste heat of other equipment.

In each of the above examples, the renewable energy power generation device can include, for example, any device that uses energy replenished constantly or repeatedly and irregularly fluctuating by natural forces such as wind power, photovoltaic power, solar thermal power, wave power or tidal power, running water or tides, and geothermal energy. Further, the compressed air energy storage apparatus of each example can also be applied to a case where electric power demand of a factory greatly fluctuates depending on an operating state of equipment that consumes large electric power in the factory. Further, a power transmission and distribution system is not limited to a general power transmission and distribution system of an electric power company, and may be a regional power grid or a microgrid power system in a factory.

Further, in each example, the air compressors 6 and 7 and the expanders 10 and 11 may be, for example, screw-type machines, but types of these rotary machines are not limited thereto. The air compressors 6 and 7 and the expanders 10 and 11 may be, for example, scroll-type machines, turbo-type machines, or reciprocating-type machines.

Further, in each example, the air compressors 6 and 7 and the expanders 10 and 11 are configured as two-stage compression and two-stage expansion types, respectively, but the air compressors and the expanders may be single-stage compression and single-stage expansion types, three-stage or more compression and expansion types, or may have different numbers of stages for compression and expansion. Further, the compressed air energy storage apparatus may include a plurality of air compressors and expanders. Further, a configuration in which the number of motors and the number of compressors are different, for example, a case where a plurality of compressors are driven by one motor, or a configuration in which the number of generators and the number of expanders are different, for example, a case where one generator is driven by a plurality of expanders, may also be adopted.

### REFERENCE SIGNS LIST

1 pneumatic unit
2 heat storage unit
3 power generation unit
4,5 motor
6,7 air compressor
8 pressure storage tank
9 inverter
10,11 expander
12,13 generator
14 power conditioner
18 photovoltaic power generation device
19 wind power generation device
20 grid power
21 high-temperature-side heat storage tank
22 low-temperature-side heat storage tank
24,25 heat exchanger
26,27 heat exchanger
28,29 pump
32 heat exchanger
34,35 heat exchanger
40 boiler unit
41 steam compressor
42 gas-liquid separator
43 low-pressure steam generation device
44 low-temperature water circulation pump
45 pressure reducing valve
46 heat absorber
47 medium-temperature water heat recovery heat exchanger
48 compressor
49 radiator
50 expansion valve
51 to 64 valve
71 first pneumatic pipe
72 first steam pipe
100 compressed air energy storage apparatus

## Claims

1. A compressed air energy storage apparatus comprising:
an air compressor that generates compressed air;
a first heat exchanger that performs heat exchange between the compressed air and a heat storage medium;
a pressure storage tank that stores the compressed air heat-exchanged by the first heat exchanger;
a heat storage tank that stores the heat storage medium heat-exchanged by the first heat exchanger;
a low-pressure steam generation device that heats water by heat exchange with the heat storage medium to generate low-pressure steam;
a steam compressor that compresses the low-pressure steam to generate high-temperature steam;
a generator that generates electric power; and
an expander that drives the generator by the compressed air or the high-temperature steam,
wherein the compressed air energy storage apparatus supplies one or more of the compressed air, the high-temperature steam, and the electric power.

2. The compressed air energy storage apparatus according to claim 1, further comprising:
a plurality of valves that open and close pipes through which the compressed air or the high-temperature steam flows; and
a control device that controls operation of the air compressor, operation of the steam compressor, and opening and closing of each of the plurality of valves in accordance with demand for the compressed air, the high-temperature steam, and the electric power.

3. The compressed air energy storage apparatus according to claim 2, further comprising:
a heating means that heats the compressed air by the high-temperature steam or the heat storage medium,
wherein the expander drives the generator by the compressed air heated by the heating means.

4. The compressed air energy storage apparatus according to claim 3,
wherein the heating means heats the compressed air by heat exchange with the high-temperature steam.

5. The compressed air energy storage apparatus according to claim 3,
wherein the heating means heats the compressed air by mixing the high-temperature steam.

6. The compressed air energy storage apparatus according to claim 3,
wherein the heating means heats the compressed air by heat exchange with the heat storage medium.

7. The compressed air energy storage apparatus according to claim 2,
wherein the low-pressure steam generation device heats the water by heat exchange with the heat storage medium to generate the low-pressure steam.

8. The compressed air energy storage apparatus according to claim 2, further comprising:
a refrigerant compressor that compresses and heats a refrigerant; and
an expansion valve that reduces pressure of the refrigerant,
wherein the low-pressure steam generation device heats the water by heat exchange with the refrigerant to generate the low-pressure steam.

9. The compressed air energy storage apparatus according to claim 8, further comprising:
a second heat exchanger that heats the refrigerant by heat exchange with the heat storage medium.

10. The compressed air energy storage apparatus according to claim 8, further comprising:
a heat absorber that heats the refrigerant by heat exchange with hot water from another device.

11. The compressed air energy storage apparatus according to claim 10, further comprising:
a third heat exchanger that heats the hot water from the other device by heat exchange with the heat storage medium.

12. The compressed air energy storage apparatus according to claim 8, further comprising:
a second heat absorber that heats the refrigerant by heat exchange with the atmosphere.
